# EUROPEAN PATENT APPLICATION

(11) **EP 4 850 770 A1**
(43) Date of publication of application: **09.12.2026**
(21) Application number: 24873861.9
(22) Date of filing: 26.03.2024
(51) Int. Cl.: A62C 37/38, A62C 3/07, A62C 3/16, H01M 50/24, H01M 10/42, A62C 31/22, E04H 6/42, G08B 17/10, A62C 37/46, A62C 99/00

(54) **ELECTRIC VEHICLE BATTERY FIRE MONITORING AND EXTINGUISHING SYSTEM APPLYING LIFTABLE DRILL LANCE DEVICE**

(30) Priority: 29.01.2024 KR 20240013555
(71) Applicant: Tanktech Co., Ltd., Saha-gu Busan 49454 (KR)
(72) Inventor: AN, Joo Ha, Saha-gu Busan 49454 (KR); KIM, Do Wan, Saha-gu Busan 49454 (KR); KIM, Sun Jae, Saha-gu Busan 49454 (KR); KIM, Deok Won, Saha-gu Busan 49454 (KR); KIM, Young Han, Saha-gu Busan 49454 (KR); YEOM, Dong Hoon, Saha-gu Busan 49454 (KR)
(74) Representative: Mooser, Sebastian Thomas
(86) International application number: PCT/KR2024/003744
(87) International publication number: WO 2025/164842

(57) **Abstract**

Proposed is an electric vehicle battery fire monitoring and extinguishing system applying an elevating-type drill lance apparatus. The electric vehicle battery fire monitoring and extinguishing system is capable of determining a possibility of an occurrence of a fire in advance by identifying an abnormal heat emission state, an occurrence of smoke, or an occurrence of a flame at a lower portion of an electric vehicle, and is capable of rapidly coping with the occurrence of the fire by initiating fire extinguishing by automatically elevating and bringing a drill lance apparatus embedded in a ground surface below the electric vehicle into close contact with the lower portion of the electric vehicle battery when the fire occurs.

## Description

### Technical Field

The present disclosure relates to an electric vehicle battery fire monitoring and extinguishing system applying an elevating-type drill lance apparatus. More particularly, the present disclosure relates to an electric vehicle battery fire monitoring and extinguishing system applying an elevating-type drill lance apparatus, the electric vehicle battery fire monitoring and extinguishing system being capable of determining a possibility of an occurrence of a fire in advance by identifying an abnormal heat emission state, an occurrence of smoke, or an occurrence of a flame at a lower portion of an electric vehicle, and the electric vehicle battery fire monitoring and extinguishing system being capable of rapidly coping with the occurrence of the fire by initiating fire extinguishing by automatically elevating and bringing a drill lance device embedded in a ground surface below the electric vehicle into close contact with the lower portion of the electric vehicle battery when the fire occurs.

### Background Art

Recently, in a situation in which the number of registered electric vehicles in Korea is gradually increasing, it is becoming an urgent problem to prepare safety measures in response to electric vehicle fires, such as frequent fires and not easily extinguished due to the characteristics of electric vehicle batteries.

In an electric vehicle, a battery storing a high capacity of energy is disposed at a lower surface of the electric vehicle. When a battery starts to ignite due to an accident or various other reasons, the temperature of the heating point is very high and continuous thermal transfer due to a high-density integrated form occurs, so that it is difficult to extinguish the fire.

When a fire occurs in an electric vehicle and an electric vehicle battery catches the fire, the fire of the electric vehicle battery does not extinguish well and is easily reignited until the electric vehicle battery is completely burned. Therefore, there is difficulty in extinguishing the fire since a large amount of fire-extinguishing water is required to be used for a long time. The most effective fire extinguishing method to solve this problem is to lift an electric vehicle in which a fire occurs by a crane and put the electric vehicle into a water tank filled with water. However, in order to put the electric vehicle into the water tank, the electric vehicle is required to be lifted by using the crane, and a large water tank is required to be mounted (manufactured) on the site, so that this method is very difficult to be performed in reality.

Currently, as the electric vehicle ownership rate is rapidly increasing, a fire of electric vehicles is also increasing at the same time. Therefore, an active response method is required due to the specificity of the electric vehicle fire, and a technology capable of securing the safety of firefighters and protecting the golden time by effective fire extinguishing is required.

### Disclosure

### Technical Problem

Accordingly, the present disclosure has been made keeping in mind the above problems occurring in the related art, and an objective of the present disclosure is to provide an electric vehicle battery fire monitoring and extinguishing system applying an elevating-type drill lance apparatus, the electric vehicle battery fire monitoring and extinguishing system being capable of determining a possibility of an occurrence of a fire in advance by identifying an abnormal heat emission state, an occurrence of smoke, or an occurrence of a flame at a lower portion of an electric vehicle, and the electric vehicle battery fire monitoring and extinguishing system being capable of rapidly coping with the occurrence of the fire by initiating fire extinguishing by automatically elevating and bringing a drill lance apparatus embedded in a ground surface below the electric vehicle into close contact with the lower portion of the electric vehicle battery when the fire occurs.

### Technical Solution

According to an aspect of the present disclosure, there is provided an electric vehicle battery fire monitoring and extinguishing system 1 applying an elevating-type drill lance apparatus, the electric vehicle battery fire monitoring and extinguishing system 1 including: a plurality of fire detection mechanisms 100 mounted in an electric vehicle parking lot; a fire occurrence identification part 200 configured to identify a fire occurrence location when a fire is detected through the fire detection mechanisms 100; and a drill lance apparatus 300 embedded in a ground surface of a plurality of electric vehicle parking areas in the electric vehicle parking lot, the drill lance apparatus 300 being configured to perform fire extinguishing by being lifted and being in close contact with a lower portion of an electric vehicle.

According to an aspect, each of the plurality of fire detection mechanisms 100 may be configured to collect at least one selected from photographing data in which a heat emission state of the lower portion of the electric vehicle is photographed, photographing data in which a flame occurs in the lower portion of the electric vehicle is photographed, photographing data in which smoke occurs in the lower portion of the electric vehicle is photographed, photographing data in which smoke occurs in an upper portion of the electric vehicle is photographed, and detection data in which smoke or a heat introduced toward the upper portion of the electric vehicle is detected, and may be configured to provide the collected data to the fire occurrence identification part 200.

According to an aspect, when the detection data is provided from any one of the plurality of fire detection mechanisms 100, the fire occurrence identification part 200 may specify the fire occurrence location on the basis of a position of the corresponding fire detection mechanism 100 providing the corresponding detection data and then may operate the drill lance apparatus 300.

According to an aspect the drill lance apparatus 300 may include: an embedded housing 310 embedded in a guide groove intagliatedly formed in the ground surface of the electric vehicle parking area; an elevating lift 320 configured such that a height of the elevating lift 320 is adjusted in a vertical direction under a control of the fire occurrence identification part 200 in a state in which the elevating lift 320 is accommodated in the embedded housing 310; a cylinder part 330 having a first side thereof connected to the elevating lift 320, the cylinder part 330 being configured to lift the elevating lift 320 by pulling a cylinder rod by using water supplied through a supply hose for lifting; and a drill module 340 mounted on an upper plate provided on an upper side of the elevating lift 320, the drill module 340 being configured to be brought into close contact with the electric vehicle battery and to form a hole in the electric vehicle battery by using a fire-extinguishing water, and the drill module 340 being configured to spray the fire-extinguishing water into the electric vehicle battery through the hole.

According to an aspect, the embedded housing 310 may have a height equal to a height of the ground surface of the electric vehicle parking area.

According to an aspect, an opening and closing door 311 configured to be opened and closed in left and right direction under a control of the fire occurrence identification part 200 such that the elevating lift 320 can protrude upward may be provided on an upper side of the embedded housing 310.

According to an aspect, a cylinder 331 having a first side thereof connected to the elevating lift 320 may be accommodated in the cylinder part 330.

According to an aspect, the drill module 340 may include: a housing 341 in which the fire-extinguishing water is injected therein; an impeller 342 provided in the housing 341 and configured to generate a rotational force by being rotated by water that is injected into the housing 341; a hole cutter 343 connected to the impeller 342 and configured to drill a fire-extinguishing hole, by the rotational force of the impeller 342, for injecting water into an inner portion of the electric vehicle battery while the hole cutter 343 is in a state in which the hole cutter 343 is in close contact with the electric vehicle battery; and an elastic body 344 provided on a lower portion of the hole cutter 343.

According to an aspect, a drain hole 341a for discharging water injected into an inner portion of the housing 341 to the outside when the impeller 342 is rotated may be provided in a side surface of the housing 341, and a fire-extinguishing water discharge port for discharging water injected into the housing 341 therethrough is provided in a distal end portion and a side surface portion of the hole cutter 343.

According to an aspect, the housing 341 may include: a slide plate 341b configured to block the drain hole 341a when the hole cutter 343 penetrates a lower portion of the electric vehicle battery by an elastic force of the elastic body 344, thereby inducing water injected into the housing 341 not to be discharged through the drain hole 341a but to be injected into the inner portion of the electric vehicle battery; a connection rod 341c connected to the slide plate 341b; and an elastic body 341d provided on the connection rod 341c, wherein a locking step 341c-1 may be formed on the connection rod (341c), and wherein a rotation trigger 345 configured to change an opening and closing state of the slide plate 341b by being rotated around a rotary shaft of a center portion of the rotation trigger 345 may be provided on the upper plate of the elevating lift 320.

According to an aspect, a push transmission part 345a in contact with a side surface of the hole cutter 343 may be provided on a first distal end portion of the rotation trigger 345, and wherein a locking mechanism 345b configured to be locked on and coupled to the locking step 341c-1 may be provided on a second distal end portion of the rotation trigger 345, the locking mechanism 345b being configured such that when the rotation trigger 345 is rotated by push of the push transmission part 345a, the locking mechanism 345b is moved in a direction opposite to the push and then is separated from the locking step 341c-1.

According to an aspect, when the hole cutter 343 penetrates the lower portion of the electric vehicle battery, a first side of the hole cutter 343 may push the push transmission part 345a, and the rotation trigger 345 may be rotated around the rotary shaft and the locking mechanism 345b may be separated from the locking step 341c-1, so that the slide plate 341b may close the drain hole 341a by an elastic force of the elastic body 341d.

### Advantageous Effects

According to an aspect of the present disclosure, there is an advantage that the possibility of the occurrence of the fire is capable of being determined in advance by identifying the abnormal heat emission state, the occurrence of the smoke, or the occurrence of the flame of the lower portion of the electric vehicle, and there is an advantage that the electric vehicle battery fire monitoring and extinguishing system is capable of rapidly coping with the occurrence of the fire by initiating fire extinguishing by automatically elevating and bringing the drill lance apparatus embedded in the ground surface below the electric vehicle into close contact with the lower portion of the electric vehicle battery when the fire occurs.

### Description of Drawings

FIG. 1 is a view illustrating a configuration of an electric vehicle battery fire monitoring and extinguishing system 1 applying an elevating-type drill lance apparatus according to an embodiment of the present disclosure.
FIG. 2 is a view illustrating a configuration of a drill lance apparatus 300 in more detail.
FIG. 3 is a view illustrating a state in which a drill module 340 illustrated in FIG. 2 is lifted upward.
FIG. 4 is a view illustrating the drill module 340 in more detail.
FIG. 5 is a view illustrating a rotation trigger 345.
FIG. 6 is a view illustrating a state in which a slide plate 341b, a connection rod 341c, and an elastic body 341d in the drill module 340 are connected to each other.
FIG. 7 is a view illustrating an opened state and a closed state of the slide plate 341b.
FIG. 8 is a flowchart illustrating an overall process of manually or automatically extinguishing an electric vehicle battery fire through the electric vehicle battery fire monitoring and extinguishing system 1 applying the elevating-type drill lance apparatus in a series of sequences.

### <Description of Reference Numerals>

1: Electric vehicle battery fire monitoring and extinguishing system applying an elevating-type drill lance apparatus
100: Fire detection mechanism
200: Fire occurrence identification part
300: Drill lance apparatus
310: Embedded housing
311: Opening and closing door
320: Elevating lift
330: Cylinder part
331: Cylinder
340: Drill module
341: Housing
341a: Drain hole
341b: Slide plate
341c: Connection rod
341c-1: Locking step
341d: Elastic body
342: Impeller
343: Hole cutter
344: Elastic body
345: Rotation trigger
345a: Push transmission part
345b: Locking mechanism

### Mode for Invention

Hereinafter, an exemplary embodiment will be described for the purpose of helping to understand the present disclosure. However, following embodiments are provided so as to facilitate understanding of the present disclosure, and the description of the present disclosure is not limited by the following embodiments.

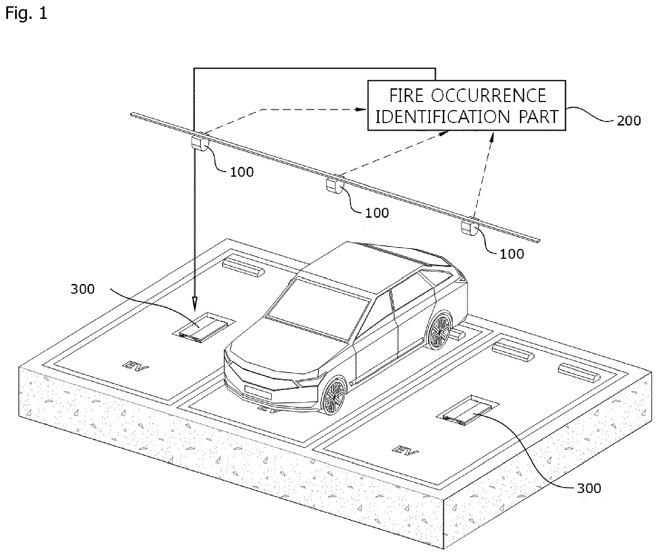

FIG. 1 is a view illustrating a configuration of an electric vehicle battery fire monitoring and extinguishing system 1 applying an elevating-type drill lance apparatus according to an embodiment of the present disclosure.

Referring to FIG. 1, the electric vehicle battery fire monitoring and extinguishing system 1 applying the elevating-type drill lance apparatus according to an embodiment of the present disclosure includes a plurality of fire detection mechanisms 100, a fire occurrence identification part 200, and a drill lance apparatus 300 which is embedded in a ground surface of a plurality of electric vehicle parking areas and which is configured to be brought into close contact with a lower portion of an electric vehicle by being elevated and to perform fire extinguishing.

The fire detection mechanism 100 may be mounted such that the plurality of fire detection mechanisms 100 are provided in an electric vehicle parking lot. Particularly, the plurality of fire detection mechanisms 100 may be mounted such that the fire detection mechanisms 100 are provided on an upper portion of each parking area in the electric vehicle parking lot. Therefore, when an electric vehicle fire occurs in each parking area, each fire detection mechanism 100 is responsible for detecting a fire in the corresponding parking area.

Such a fire detection mechanism 100 may be interlocked with a camera apparatus (a general camera apparatus, a thermal imaging camera apparatus, and so on) which is mounted on a floor surface of the electric vehicle parking area and which is configured to collect photographing data by photographing a heat emission state of a lower portion of an electric vehicle, whether a flame is generated, whether smoke is generated, and so on.

In addition, the fire detection mechanism 100 may be interlocked with a camera apparatus which is mounted above an electric vehicle and which is configured to collect photographing data by photographing a heat emission state of a lower portion of the electric vehicle, whether a flame is generated, whether smoke is generated, and so on.

In addition, the fire detection mechanism 100 may be a detection sensor mounted above an electric vehicle and configured to collect detection data by detecting smoke, heat, or a flame that flows toward an upper portion of the electric vehicle.

The photographing data of the lower portion of the electric vehicle, the photographing data of the upper portion of the electric vehicle, or the detection data collected by the fire detection mechanism 100 in this manner are provided to the fire occurrence identification part 200.

The fire occurrence identification part 200 is configured to identify a fire occurrence location by receiving the detection date from the fire detection mechanism 100, is configured to elevate and bring a drill module 340 of the drill lance apparatus 300 that will be described later into close contact with a corresponding electric vehicle battery, and is configured to automatically inject fire extinguishing water into the lower portion of the electric vehicle battery, thereby performing fire extinguishing.

More specifically, the fire occurrence identification part 200 may receive the detection data on the heat emission state of the electric vehicle, whether a flame occurs in the electric vehicle, whether smoke occurs in the electric vehicle, and so on from the fire detection mechanism 100 mounted for each electric vehicle parking area, and may identify at least one selected from an abnormal heat emission state, smoke generation state, and a flame detection state of the lower portion of the electric vehicle on the basis of the detection data.

Here, the fire occurrence identification part 200 does not simply check the heat emission state of the battery at the lower portion of the electric vehicle from the moment the electric vehicle is parked, but rather identify an abnormal heat emission state after a predetermined cooling time on the basis of the starting time of parking the electric vehicle. For example, the battery at the lower portion of the electric vehicle is in a considerably heated state when the electric vehicle is first parked. Therefore, when the abnormal heat emission state of the electric vehicle is identified in this state, it may lead to a misjudgment that the electric vehicle in in the abnormal heat emission state. Therefore, the fire occurrence identification part 200 may identify the abnormal heat emission state from a time when a predetermined cooling time (for example, after 10 minutes) is elapsed on the basis of the starting time of parking the electric vehicle.

In an embodiment, in the process of identifying the abnormal heat emission state of the battery in the lower portion of the electric vehicle, the fire occurrence identification part 200 may determine a photographing spot where an abnormal heat emission is likely to occur according to a vehicle type of the corresponding electric vehicle, and may further intensively photograph the photographing spot.

For example, since all types of batteries applied to each type of electric vehicle may be different from each other, the fire occurrence identification part 200 may learn a spot where a heat emission is particularly and frequently occurs according to the vehicle type of the parked electric vehicle. Therefore, when the electric vehicle of the same vehicle type as the corresponding vehicle is parked, the fire occurrence identification part 200 may identify the heat emission state of the vehicle intensively on the spot where the heat emission is particularly and frequently occurs. In this situation, the fire occurrence identification part 200 may designate a photographing spot such that the corresponding spot is more intensively photographed by a dual image camera and a flame detection camera.

On the basis of the collected battery status information, the fire occurrence identification part 200 determines if there is an abnormal symptom in the electric vehicle. Furthermore, when it is determined that the abnormal symptom such as an abnormal heat emission, an occurrence of a flame, an occurrence of smoke, or the like occurs, the fire occurrence identification part 200 may initiate fire extinguishing through the drill lance apparatus 300.

The drill lance apparatus 300 is embedded in the ground surface of each of the plurality of electric vehicle parking areas in the electric vehicle parking lot, and is configured to extinguish a fire by being elevated such that the drill lance apparatus 300 is brought into close contact with the lower portion of the electric vehicle. This is described in more detail below.

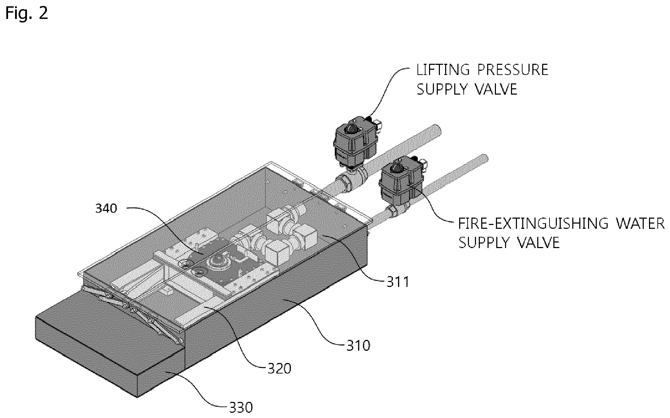

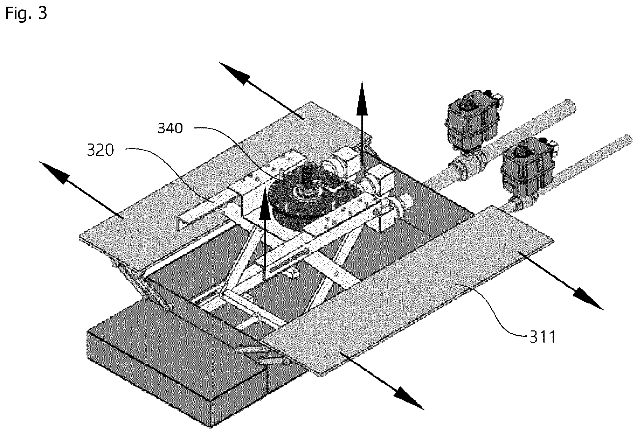

FIG. 2 is a view illustrating a configuration of the drill lance apparatus 300 in more detail, and FIG. 3 is a view illustrating a state in which the drill module 340 illustrated in FIG. 2 is lifted upward.

Referring to FIG. 2 and FIG. 3, the drill lance apparatus 300 includes an embedded housing 310, an elevating lift 320, a cylinder part 330, and the drill module 340.

The embedded housing 310 is embedded in a guide groove formed in the ground surface of the electric vehicle parking area, and the elevating lift 320 and the drill module 340 are accommodated in the embedded housing 310. In addition, the cylinder part 330 is provided on a first side of the embedded housing 310. A cylinder 331 having a first side connected to the elevating lift 320 is accommodated in the cylinder part 330.

Since the embedded housing 310 is mounted such that the embedded housing 310 has the same height as the ground surface, there is no interference with the lower portion of the electric vehicle even when the vehicle is moved.

An opening and closing door 311 configured to be opened and closed in left and right directions under the control of the fire occurrence identification part 200 so that the elevating lift 320 can protrude upward is provided on an upper side of the embedded housing 310. The opening and closing door 311 is configured to be maintained in a closed state during a normal situation, and is configured to be immediately opened under the control of the fire occurrence identification part 200 so that a fire in the lower portion of the electric vehicle battery can be quickly extinguished when it is determined that the fire occurs.

The opening and closing door 311 may be formed of a steel material or tempered glass capable of sufficiently withstanding the load of the electric vehicle. In addition, the opening and closing door 311 is provided such that the opening and closing door 311 is capable of being replaced with a new opening and closing door from the embedded housing 310 at any time in case of emergency.

A height of the elevating lift 320 is configured to be adjusted under the control of the fire occurrence identification part 200 in a state in which the elevating lift 320 is accommodated in the embedded housing 310. The elevating lift 320 is connected to a cylinder rod of the cylinder part 330.

The cylinder 331 is accommodated inside the cylinder part 330, and an end portion of the cylinder rod is connected to the elevating lift 320 in a state in which the cylinder 331 is mounted in a transverse direction. The cylinder 331 performs an operation of pulling or pushing the cylinder rod under the control of the fire occurrence identification part 200, so that an upper plate of the elevating lift 320 is elevated in up and down directions accordingly.

A first side of the cylinder part 330 is connected to a supply hose for lifting. Furthermore, as the cylinder rod pulls the cylinder rod by using water supplied through the supply hose for lifting such that the cylinder rod protrudes, the upper plate of the elevating lift 320 is elevated upward.

The drill module 340 is mounted on the upper plate provided on the upper side of the elevating lift 320. Furthermore, the drill module 340 is configured to form a hole in the electric vehicle battery through a fire-extinguishing water by being in close contact with the electric vehicle battery, and is configured to spray the fire-extinguishing water into the electric vehicle battery through the hole. This is described in more detail below.

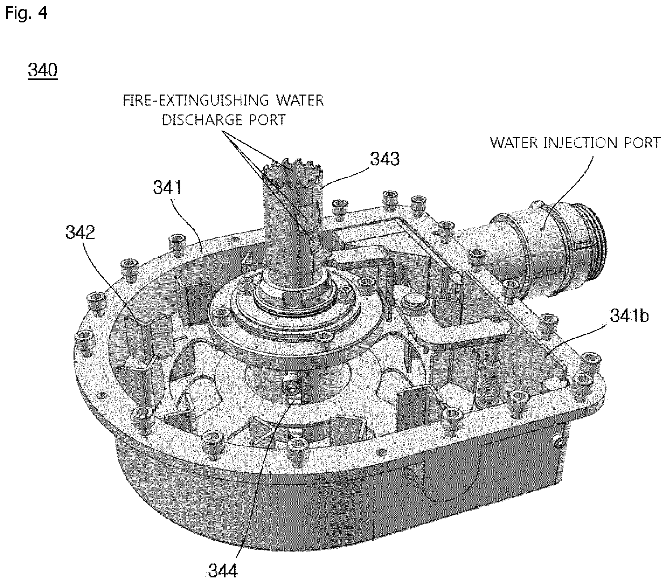

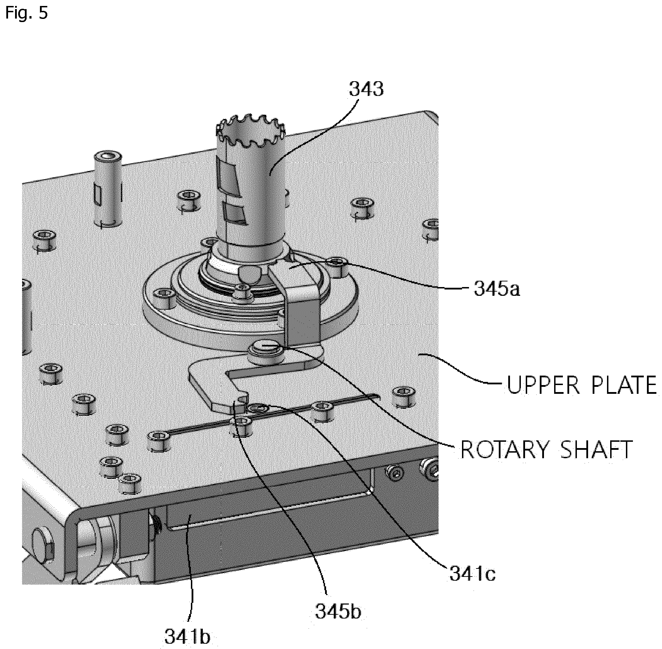

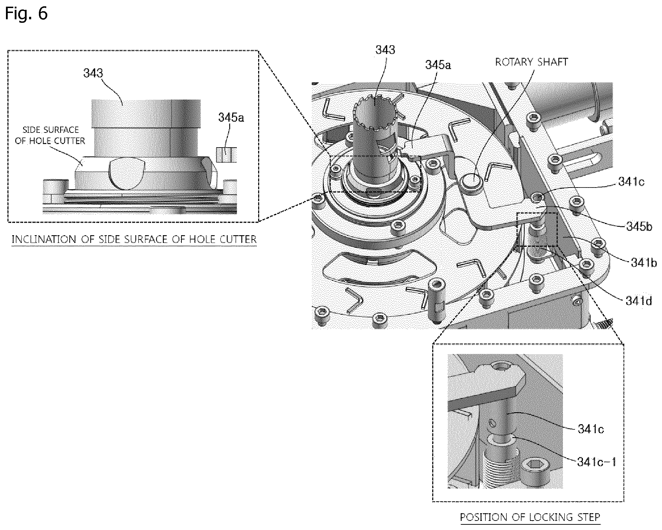

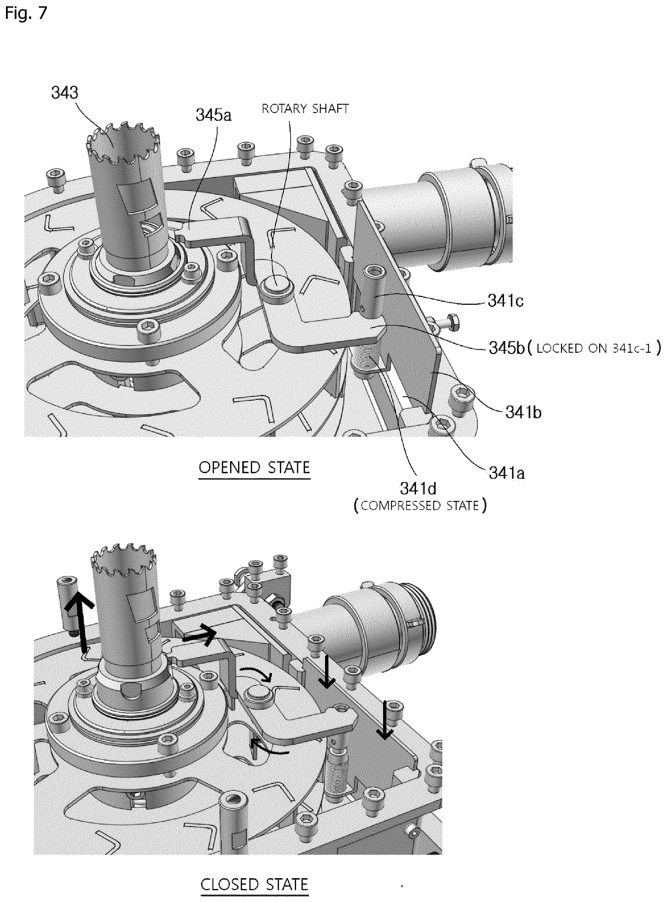

FIG. 4 is a view illustrating the drill module 340 in more detail, FIG. 5 is a view illustrating a rotation trigger 345, FIG. 6 is a view illustrating a state in which a slide plate 341b, a connection rod 341c, and an elastic body 341d in the drill module 340 are connected to each other, and FIG. 7 is a view illustrating an opened state and a closed state of the slide plate 341b.

Referring to FIG. 4 to FIG. 7, the drill module 340 is mounted on a lower side of the upper plate provided on the upper side of the elevating lift 320, and is configured to be brought into close contact with the lower portion of the electric vehicle battery as a height of the drill module 340 is adjusted upward by the elevating lift 320 connected to the cylinder 331. This is described in more detail below.

In a state in which the drill module 340 is connected to the upper plate provided on the upper side of the elevating lift 320, the drill module 340 is moved upward and is brought into close contact with the lower portion of the electric vehicle battery.

In this state, forming a hole in the lower portion of the electric vehicle battery is automatically started at the same time when the fire extinguishing water supplied through a fire-extinguishing water supply hose connected to a first side of the drill module 340 is injected into the drill module 340.

The drill module 340 includes a housing 341 in which water is injected, an impeller 342 provided in the housing 341 and configured to generate a rotational force by being rotated by water that is injected through the fire-extinguishing water supply hose, a hole cutter 343 connected to the impeller 342 and configured to form a fire-extinguishing hole for injecting water into the electric vehicle battery by a rotational force of the impeller 342, and an elastic body 344 provided on a lower portion of the hole cutter 343.

The impeller 342, the hole cutter 343, and the elastic body 344 are accommodated inside the housing 341. In addition, a water injection port for injecting the fire-extinguishing water into the inner side of the housing 341 is provided in a first side of the housing 341, and the impeller 342 in the housing 341 is configured to be rotated by hydraulic pressure of the fire-extinguishing water injected through the water injection port. The rotational force of the impeller 342 is directly transferred to the hole cutter 343 and, as a result, the hole cutter 343 perforates the lower portion of the electric vehicle battery by the hydraulic pressure. The fire-extinguishing water injected through the water injection port provided in the housing 341 is rotated along an inner wall of the housing 341 and, at this time, rotates the impeller 342. The impeller 342 generates the rotational force by being rotated by the hydraulic pressure, and the hole cutter 343 is rotated by the rotational force.

The hole cutter 343 is rotated by the rotational force of the impeller 342, and forms the fire-extinguishing hole in the lower portion of the electric vehicle battery. Therefore, a large amount of fire-extinguishing water is injected into the inside of the electric vehicle battery through the fire-extinguishing hole, so that the fire may be more effectively extinguished.

At this time, the hole cutter 343 has a pipe shape having a hollow inner portion, and a distal end portion and a side surface of the hole cutter 343 have fire-extinguishing water discharge ports for discharging the fire-extinguishing water injected through the water inlet port to the inside of the electric vehicle battery by passing through the fire-extinguishing hole.

The elastic body 344 is compressed when the hole cutter 343 is brought into close contact with the lower portion of the electric vehicle battery, and is configured such that the housing 341 is always directed upward by the elastic force, thereby allowing the hole cutter 343 to be always in close contact with the lower portion of the electric vehicle battery.

In a state in which the hole cutter 343 is in close contact with the lower surface of the electric vehicle battery, the impeller 342 is rotated by the hydraulic pressure and the hole cutter 343 is rotated, and the hole cutter 343 gradually perforates the hole in the electric vehicle battery, so that the hole cutter 123 penetrates the lower portion of the electric vehicle battery. This is possible because the elastic body 344 always pushes the housing 341 toward the electric vehicle battery by the elastic force.

Meanwhile, until the hole is drilled by the hole cutter 343, water injected through the water inlet port is required to be discharged to the outside. To this end, a drain hole 341a may be formed on a side surface of the housing 341.

The drain hole 341a serves as a type of water discharge port that allows the injected water to be discharged to the outside until the hole is drilled by the hole cutter 343. At this time, in order to prevent water injected through the water inlet port from being discharged to the drain hole 341a after the hole is drilled by the hole cutter 343, the slide plate 341b is provided on the first side of the housing 341. This is described in more detail below.

The connection rod 341c that is connected to the slide plate 341b and the elastic body 341d that is provided on the connection rod 341c are provided inside the housing 341, and the rotation trigger 345 configured to change the opening and closing state of the slide plate 341b by being rotated around a rotary shaft of a center portion of the rotation trigger 345 is provided on the upper plate of the elevating lift 320. Basically, the slide plate 341b is connected to a first side of the connection rod 341c. Therefore, when the connection rod 341c is moved upward, the slide plate 341b is moved upward, so that the drain hole 341a is opened. Furthermore, when the connection rod 341c is moved downward, the slide plate 341b is moved downward, so that the drain hole 341a is closed.

At this time, a lower distal end portion of the connection rod 341c is connected to the slide plate 341b, and an upper distal end portion of the connection rod 121c is connected to a lower surface of the upper plate connected to the drill module 340. That is, in the present disclosure, the housing 341 has a structure in which the housing 341 is closely coupled to the lower surface of the upper plate of elevating lift 320 by a plurality of bolts, and the upper distal end portion of the connection rod 341c has a structure in which a part of the upper distal end portion of the connection rod 341c passes through the upper plate of the elevating lift 320 and is exposed to the outside. On the middle of the connection rod 341c that is exposed, a locking step 341c-1 having a narrow diameter is formed.

In a state in which the slide plate 341b is moved upward and the drain hole 341a is opened, the locking step 341c-1 of the connection rod 341c is moved upward higher than the upper plate and then is exposed. At this time, as a first side of the rotation trigger 345 is locked on the locking step 341c-1, the current state (the state in which the drain hole 341a is opened) of the slide plate 341b is maintained.

More specifically, since the rotation trigger 345 is connected to the upper plate via the rotary shaft, the rotation trigger 345 is configured to be rotated in a clockwise direction or a counterclockwise direction around the rotary shaft of the center portion of the rotation trigger 345.

At this time, a push transmission part 345a is provided on a first distal end portion of the rotation trigger 345. When the hole cutter 343 is gradually moved upward, the push transmission part 345a is in contact with the side surface of the hole cutter 343 and is pushed backward. In this situation, the rotation trigger 345 is rotated by the rotary shaft, and a second distal end of the rotation trigger 345 is moved in a direction opposite to the push. A locking mechanism 345b configured to be locked on the locking step 341c-1 of the connection rod 341c described above is provided on the second distal end portion of the rotation trigger 345.

That is, when the slide plate 341b is moved upward and the drain hole 341a is opened, the locking step 341c-1 of the connection rod 341c is moved upward above the upper plate, and the locking step 341c-1 is locked on the locking mechanism 345b. In this state, as long as the locking means 345b is not separated from the locking step 341c-1, the slide plate 341b maintains the state in which the drain hole 341a is opened.

In the current state, the elastic body 341d is provided on the connection rod 341c. When the slide plate 341b is moved upward by the connection rod 341c, the elastic body 341d is compressed by the upper plate and a portion connecting the slide plate 341b to the connection rod 341c, so that the elastic body 341d has a compression force.

In the current state, when the hole cutter 343 is moved upward, the push transmission part 345a that is in contact with the side surface of the hole cutter 343 is gradually pushed backward. To this end, the hole cutter 343 has a structure in which the diameter of the side surface of the hole cutter 343 is gradually widened. Therefore, when the hole cutter 343 is gradually moved upward, the diameter of the side surface of the hole cutter 343 is gradually widened, and the push transmission part 345a is gradually pushed backward, so that the rotation trigger 345 is rotated around the rotary shaft.

By such a rotation, the locking mechanism 345b is separated from the locking step 341c-1. Furthermore, as the elastic body 341d that was compressed pushes the portion connecting the slide plate 341b to the connection rod 341c by the compression force, the slide plate 341b is moved downward, so that the drain hole 341a is closed.

Therefore, when the hole cutter 343 completely perforates the lower portion of the electric vehicle battery, the slide plate 341b blocks the drain hole 341a, so that water injected into the housing 341 is not discharged trough the drain hole 341a and is induced to be injected into the inside of the electric vehicle battery through the fire-extinguishing hole.

Next, a process of detecting a fire, identifying a location of the occurrence of the fire, and extinguishing the fire by using the electric vehicle battery fire monitoring and extinguishing system 1 applying the elevating-type drill lance apparatus will be sequentially described.

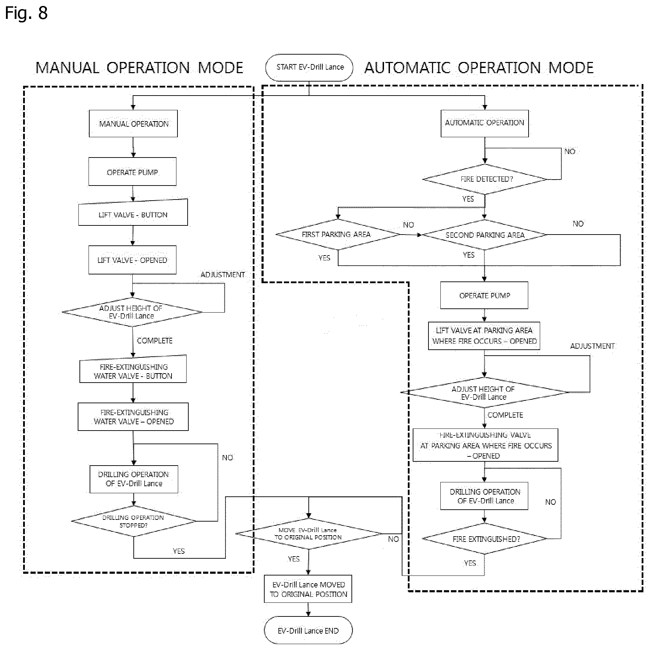

FIG. 8 is a flowchart illustrating an overall process of manually or automatically extinguishing an electric vehicle battery fire through the electric vehicle battery fire monitoring and extinguishing system 1 applying the elevating-type drill lance apparatus in a series of sequences.

Referring to FIG. 8, the electric vehicle battery fire monitoring and extinguishing system 1 applying the elevating-type drill lance apparatus according to the present disclosure may be provided such that a manual operation is capable of being performed through a manual operation of a worker, or may be configured to detect an electric vehicle fire and to automatically extinguish the fire by an automatic operation.

First, in the manual operation, the worker operates a button in a separate junction box (not illustrated) connected to the drill lance apparatus 300 so that the opening and closing door 311 of the embedded housing 310 is opened. In this state, the worker operates an operation button so that a valve of the supply hose for lifting is opened, and water is supplied to the cylinder 331 of the cylinder part 330. Accordingly, as the cylinder rod of the cylinder part 331 is pulled, the height of the elevating lift 320 is increased, the drill module 340 is brought into close contact with the lower portion of the electric vehicle battery.

In this state, the worker operates the operation button so that a valve of the fire-extinguishing water supply hose is opened, and the fire-extinguishing water is supplied to the housing 341 of the drill module 340, so that perforating of the lower portion of the electric vehicle battery is started.

In the automatic operation, when a fire occurs in the electric vehicle parking lot, the fire detection mechanism 100 mounted in the corresponding parking area of the electric vehicle detects the fire. The detection data detected through the fire detection mechanism 100 is provided to the fire occurrence identification part 200, and the fire occurrence identification part 200 identifies and specifies an accurate fire occurrence location.

After that, in order for the opening and closing door 311 of the embedded housing 310 embedded in the ground surface of the corresponding fire occurrence location to be opened and the cylinder 331 to be operated at the same time, the fire occurrence identification part 200 opens the valve of the supply hose for lifting, so that water is supplied to the cylinder 331 of the cylinder part 330. Accordingly, as the cylinder rod of the cylinder part 331 is automatically pulled, the height of the elevating lift 320 is increased, so that the drill module 340 is brought into close contact with the lower portion of the electric vehicle battery.

In this state, the fire-extinguishing water is automatically injected through the fire-extinguishing water supply hose and, at the same time, hole forming, spraying of the fire- extinguishing water, and fire extinguishing through the drill module 340 are started.

Although the exemplary embodiments of the present disclosure have been described above, it may be understood by those skilled in the art that a variety of modifications and changes may be made without departing from the concept and scope of the present disclosure disclosed within the range of the following claims.

### Industrial applicability

According to the present disclosure, a possibility of an occurrence of a fire is capable of being determined in advance, and the fire is capable of being rapidly extinguished when the fire occurs. Therefore, the present disclosure is a technology capable of being widely used in the electric vehicle industry and the firefighting industry and capable of realizing practical and economic values thereof.

## Claims

1. An electric vehicle battery fire monitoring and extinguishing system applying an elevating-type drill lance apparatus, the electric vehicle battery fire monitoring and extinguishing system comprising:
a plurality of fire detection mechanisms (100) mounted in an electric vehicle parking lot;
a fire occurrence identification part (200) configured to identify a fire occurrence location when a fire is detected through the fire detection mechanisms (100); and
a drill lance apparatus (300) embedded in a ground surface of a plurality of electric vehicle parking areas in the electric vehicle parking lot, the drill lance apparatus (300) being configured to perform fire extinguishing by being lifted and being in close contact with a lower portion of an electric vehicle.

2. The electric vehicle battery fire monitoring and extinguishing system of claim 1, wherein each of the plurality of fire detection mechanisms (100) is configured to collect at least one selected from photographing data in which a heat emission state of the lower portion of the electric vehicle is photographed, photographing data in which a flame occurs in the lower portion of the electric vehicle is photographed, photographing data in which smoke occurs in the lower portion of the electric vehicle is photographed, photographing data in which smoke occurs in an upper portion of the electric vehicle is photographed, and detection data in which smoke or a heat introduced toward the upper portion of the electric vehicle is detected, and is configured to provide the collected data to the fire occurrence identification part (200).

3. The electric vehicle battery fire monitoring and extinguishing system of claim 2, wherein, when the detection data is provided from any one of the plurality of fire detection mechanisms (100), the fire occurrence identification part (200) specifies the fire occurrence location on the basis of a position of the corresponding fire detection mechanism (100) providing the corresponding detection data and then operates the drill lance apparatus (300).

4. The electric vehicle battery fire monitoring and extinguishing system of claim 1, wherein the drill lance apparatus (300) comprises:
an embedded housing (310) embedded in a guide groove intagliatedly formed in the ground surface of the electric vehicle parking area;
an elevating lift (320) configured such that a height of the elevating lift (320) is adjusted in a vertical direction under a control of the fire occurrence identification part (200) in a state in which the elevating lift (320) is accommodated in the embedded housing (310);
a cylinder part (330) having a first side thereof connected to the elevating lift (320), the cylinder part (330) being configured to lift the elevating lift (320) by pulling a cylinder rod by using water supplied through a supply hose for lifting; and
a drill module (340) mounted on an upper plate provided on an upper side of the elevating lift (320), the drill module (340) being configured to be brought into close contact with the electric vehicle battery and to form a hole in the electric vehicle battery by using a fire-extinguishing water, and the drill module (340) being configured to spray the fire-extinguishing water into the electric vehicle battery through the hole.

5. The electric vehicle battery fire monitoring and extinguishing system of claim 4, wherein the embedded housing (310) has a height equal to a height of the ground surface of the electric vehicle parking area.

6. The electric vehicle battery fire monitoring and extinguishing system of claim 4, wherein an opening and closing door (311) configured to be opened and closed in left and right direction under a control of the fire occurrence identification part (200) such that the elevating lift (320) can protrude upward is provided on an upper side of the embedded housing (310).

7. The electric vehicle battery fire monitoring and extinguishing system of claim 4, wherein a cylinder (331) having a first side thereof connected to the elevating lift (320) is accommodated in the cylinder part (330).

8. The electric vehicle battery fire monitoring and extinguishing system of claim 4, wherein the drill module (340) comprises:
a housing (341) in which the fire-extinguishing water is injected therein;
an impeller (342) provided in the housing (341) and configured to generate a rotational force by being rotated by water that is injected into the housing (341);
a hole cutter (343) connected to the impeller (342) and configured to drill a fire-extinguishing hole, by the rotational force of the impeller (342), for injecting water into an inner portion of the electric vehicle battery while the hole cutter (343) is in a state in which the hole cutter (343) is in close contact with the electric vehicle battery; and
an elastic body (344) provided on a lower portion of the hole cutter (343).

9. The electric vehicle battery fire monitoring and extinguishing system of claim 8, wherein a drain hole (341a) for discharging water injected into an inner portion of the housing (341) to the outside when the impeller (342) is rotated is provided in a side surface of the housing (341), and a fire-extinguishing water discharge port for discharging water injected into the housing (341) therethrough is provided in a distal end portion and a side surface portion of the hole cutter (343).

10. The electric vehicle battery fire monitoring and extinguishing system of claim 9, wherein the housing (341) comprises:
a slide plate (341b) configured to block the drain hole (341a) when the hole cutter (343) penetrates a lower portion of the electric vehicle battery by an elastic force of the elastic body (344), thereby inducing water injected into the housing (341) not to be discharged through the drain hole (341a) but to be injected into the inner portion of the electric vehicle battery;
a connection rod (341c) connected to the slide plate (341b); and
an elastic body (341d) provided on the connection rod (341c),
wherein a locking step (341c-1) is formed on the connection rod (341c), and
wherein a rotation trigger (345) configured to change an opening and closing state of the slide plate (341b) by being rotated around a rotary shaft of a center portion of the rotation trigger (345) is provided on the upper plate of the elevating lift (320).

11. The electric vehicle battery fire monitoring and extinguishing system of claim 10, wherein a push transmission part (345a) in contact with a side surface of the hole cutter (343) is provided on a first distal end portion of the rotation trigger (345), and
wherein a locking mechanism (345b) configured to be locked on and coupled to the locking step (341c-1) is provided on a second distal end portion of the rotation trigger (345), the locking mechanism (345b) being configured such that when the rotation trigger (345) is rotated by push of the push transmission part (345a), the locking mechanism (345b) is moved in a direction opposite to the push and then is separated from the locking step (341c-1).

12. The electric vehicle battery fire monitoring and extinguishing system of claim 10, wherein, when the hole cutter (343) penetrates the lower portion of the electric vehicle battery, a first side of the hole cutter (343) pushes the push transmission part (345a), and the rotation trigger (345) is rotated around the rotary shaft and the locking mechanism (345b) is separated from the locking step (341c-1), so that the slide plate (341b) closes the drain hole (341a) by an elastic force of the elastic body (341d).
